# EUROPEAN PATENT SPECIFICATION

(11) **EP 2 531 541 B1**
(45) Date of publication and mention of the grant of the patent: **22.01.2014**
(21) Application number: 11704364.6
(22) Date of filing: 03.02.2011
(51) Int. Cl.: C08G 63/12, C08G 63/78, C08J 3/12, C08J 11/14

(54) **REPROCESSING OF ALKYD RESINS**
NEUVERARBEITUNG VON ALKYDHARZEN
RETRAITEMENT DE RÉSINES ALKYDES

(30) Priority: 05.02.2010 US 302077 P
(43) Date of publication of application: 12.12.2012
(73) Proprietor: The Procter & Gamble Company, Cincinnati, OH 45202 (US)
(72) Inventor: NODA, Isao, Fairfield, Ohio 45014 (US); ALLEN, William, Maxwell, Jr., Liberty Township, Ohio 45044 (US)
(74) Representative: Holmes, Rosalind
(86) International application number: PCT/US2011/023581
(87) International publication number: WO 2011/097363

(56) References cited:
- EP-A1- 0 693 527
- WO-A1-94/25517
- US-A- 3 951 886

## Description

### FIELD OF THE INVENTION

This disclosure generally relates to a method for reprocessing and recycling infusible, insoluble alkyd resins into new shapes and forms. More specifically, the disclosure relates to the reprocessing and recycling of pelletized or scrap infusible, insoluble alkyd resins into pellets, films, sheets, fibers, nonwovens, and molded articles using an extruder.

### BACKGROUND OF THE INVENTION

Synthetic resins are classified into two major material classes: thermoplastic resins and thermoset resins. Thermoplastic resins, such as polyethylene, polypropylene, polyethylene terephthalate, polystyrene, and nylon are high molecular weight polymers that melt into soft and pliable material when heated, and freeze to a hard, crystalline or glassy state when cooled. Thermoplastic resins can undergo this melt processing repeatedly, allowing them to be recycled or remolded into different shapes. Thermoplastic resins are soluble in certain solvents, such as, for example ortho-chlorophenol, mineral oil, and benzene.

Thermoset resins, such as epoxy, phenol formaldehyde, and urea formaldehyde, are high molecular weight polymers that irreversibly convert into infusible (i.e. incapable of being melted) and insoluble (i.e. cannot be dissolved in a solvent) polymer networks by curing. Curing refers to the toughening or hardening of a polymer material by the cross-linking of polymer chains. As used herein, "cross-linking" is the process of bonding one polymer chain to another. Prior to curing, thermoset materials are typically liquid or malleable, and exist as a reactive mixture of monomers and oligomers. This reactive mixture is introduced into a mold where it is crosslinked to create a rigid, three-dimensional network of oligomer chains with a desired shape or form. Compared with thermoplastics, articles made of thermoset resins have superior dimensional stability and both thermal and chemical resistance due to the stable three-dimensional molecular network. Therefore, thermoset resins do not deform or creep, even at an elevated temperature, and do not appreciatively swell when exposed to solvents. Unlike thermoplastic resins, thermoset resins cannot be reprocessed or recycled (i.e. melted and reshaped) after they are cured.

US3,951,886 states: a process for producing polyester resins, such as saturated polyester resin, alkyd resin and unsaturated polyester resin from polyester wastes, which comprises depolycondensing polyester wastes with at least one polyols in the presence of at least one titanyl oxalate compound and/or titanium tartrate compound and subsequently polycondensing the resulting depolycondensation product with at least one polycarboxylic acid or its anhydride or with at least one polycarboxylic acid or its anhydride and at least one polyol, optionally in the presence of at least one phosphorus compound.

Alkyd resins are formed by the condensation of polyols with polyfunctional acids, anhydrides, or a mixture of polyfunctional acids and anhydrides to result in ester moieties. As used herein, "condensation" is the reaction of an alcohol with a carboxylic acid or carboxylic acid derivative to form an ester with the liberation of a water by-product. Because the individual polyol, acid, and anhydride monomers have multiple functional groups on them, generally at least three, alkyd resins form a well-crosslinked molecular network upon curing, which is characteristic of classical thermoset resins. Therefore, it has been believed that such insoluble and infusible, fully cured alkyd resins cannot be melted and reshaped like thermoplastics. This limitation has prevented the recycling of scrap alkyd resins and the reprocessing of alkyd resins into new shapes and forms. Therefore, alkyd resins have not been used in applications traditionally dominated by thermoplastic resins such as for the production of pellets, sheets, films, fibers, nonwovens, and molded articles.

Extrusion is used in polymer processing as a method for forming objects with a fixed cross-section or as a method for transporting and metering molten plastic (thermoplastic) before it is cooled to form a desired shape. Generally, raw material (e.g. powders, small resin chips, pellets) is fed into an extruder (i.e. a device that performs extrusion). Once inside the extruder, the material is liquefied by heating, mixing, and pressurizing the raw material at a temperature above the melting or glass transition temperature of the material via a shearing (or conveying) screw. The resulting molten plastic is then kneaded to produce a uniform melt under shear, and thereafter transported through a die where the plastic exiting the die has a cross-section mirroring the shape of the die. The material is then metered, cooled to result in the final desired shape or form, and cut to a desired length. Extrusion is often used as a method for the melt processing of thermoplastic resins, allowing them to be recycled and reformed into different shapes and forms. Extrusion is not useful, however, to reprocess infusible, insoluble thermoset resins.

Extrusion processes require a continuous fluid phase that can be conveyed through the extruder by the shearing screw. This fluid phase functions to transfer necessary energy from the screw to the fed material for proper flow, and results from the melting of fed material. Without a continuous third phase, the thermoset material - an infusible and insoluble material - in the extruder faces the following problems: (i) the fed material is typically too tough to be pulverized in the extruder and, without a liquid phase, cannot be conveyed through the clearance of the extruder barrel and shearing screw; (ii) even if the fed material can be pulverized into small particles, these particles are still infusible and generally compact, and will jam the extruder; and, (iii) infusible resins in an extruder under high temperature and shear generally undergo chemical degradation and, in the absence of a reverse process (i.e. repolymerization), will not produce useful articles after extrusion. Therefore, if the resin is not fusible, the continuous fluid phase necessary for extrusion is not obtainable, and reprocessing of the resin cannot occur. This continuous fluid phase is also not obtainable if the resin is not soluble.

A method for reprocessing infusible, insoluble alkyd resins into new shapes and forms would allow alkyd resins to be formed into pellets, sheets, films, fibers, nonwovens, and molded articles to be used in unconventional applications such as, for example, packages, hygiene products, tapes and fabrics. These products would be advantageous over similar products formed from thermoplastic resins because they would have superior dimensional stability and superior resistance to heat, chemicals, and solvents. The reprocessing of alkyd resins would also make possible the ability to recycle alkyd resins. Recycling alkyd resins would, in turn, reduce the amount of alkyd resin waste that is formed during processing, reduce the amount of water that is required during processing, and would result in cost savings.

As mentioned above, alkyd resins - also infusible and insoluble, like thermoset resins - have not been used in applications traditionally dominated by thermoplastics because it was thought that reprocessability of such resins was limited in the same manner as reprocessability of thermosets is limited.

### SUMMARY OF THE INVENTION

Disclosed herein are methods of reforming or recycling infusible, insoluble alkyd resins into new shapes and forms. The infusible, insoluble alkyd resins that are reformed or recycled can include pellets, powders, chips, chunks, scraps, pulverized articles, and mixtures thereof. Also disclosed herein are infusible, insoluble alkyd resins that have been reformed into shaped articles that have traditionally been made with thermoplastics. The shapes of the reformed alkyd resins can include pellets, films, sheets, fibers, nonwovens, and molded articles. Also disclosed herein (but not claimed as such) is a pelletized, infusible, insoluble alkyd resin that is reprocessable into a reformed alkyd resin. The pelletized alkyd resin has at least one cross-sectional plane with a dimension of about 0.20 cm to about 0.75 cm, and a longitudinal axis that is perpendicular to the cross-sectional plane with a dimension of about 0.05 cm to about 0.75 cm.

Also disclosed herein (but not claimed as such) are reformed alkyd resins in a form selected from the group consisting of pellets, films, sheets, fibers, nonwovens, and molded articles.

Yet another aspect of the invention is a method of reforming alkyd resins using an extruder, for example. In this method, water and an infusible, insoluble alkyd resin are fed into an extruder. The water and the infusible, insoluble alkyd resin are heated and mixed under high shear to promote depolymerization of the resin into a prepolymer liquid. This prepolymer liquid includes monomers and oligomers of polyols and excipients selected from the group consisting of polyfunctional acids, anhydrides, and mixtures thereof. The prepolymer liquid is extruded through a die of the extruder to form an extrudate, which also includes monomers and oligomers of the polyol and the excipient. Water is evaporated from the extrudate to promote condensation of the monomers and oligomers to form the reformed alkyd resin.

Another aspect of the invention relates to a method of reforming an infusible, insoluble alkyd resin without the use of an extruder. In this method, water and an infusible, insoluble alkyd resin are heated and mixed under high shear to promote depolymerization of the resin into a prepolymer liquid. This prepolymer liquid includes monomers and oligomers of polyols and excipients selected from the group consisting of polyfunctional acids, anhydrides, and mixtures thereof. Water is evaporated from the prepolymer liquid to promote condensation of the monomers and oligomers to form the reformed alkyd resin.

Also disclosed herein (but not claimed as such) are alkyd resins in the form of powders, chips, chunks, scraps, and pulverized articles that are recyclable into reformed alkyd resins such as pellets, films, sheets, fibers, nonwovens, and molded articles.

Additional features of the invention may become apparent to those skilled in the art from a review of the following detailed description, taken in conjunction with the examples, and the appended claims.

### DETAILED DESCRIPTION OF THE INVENTION

It has now been found that infusible, insoluble alkyd resins can be reprocessed into reformed alkyd resins, for example, pellets, films, sheets, fibers, nonwovens, and molded articles, as if they were conventional thermoplastic resins. This reprocessing occurs by taking advantage of the nature of the chemical structure of alkyd resins, which are cross-linked with relatively labile ester bonds. These ester bonds are formed by the condensation between a polyol and a polyfunctional acid, an anhydride, or mixtures thereof. The condensation reaction for forming the ester bonds is reversible, driven in the forward direction by heat and the removal of water, in which water is produced as a reaction by-product, and driven in the reverse direction by heat and the addition of water. Thus, it has been found that the reprocessing of alkyd resins is not a simple melting of the resin, but the controlled degradation of polymer to oligomers and monomers, followed by the subsequent regeneration of polymer from the oligomers and monomers.

The infusible, insoluble alkyd resins can be reprocessed into reformed alkyd resins using an extruder. In the past, an extruder has been used only as a conventional melting (i.e. physical change of state) and conveying device for plastics processing. Because alkyd resins are infusible, it was thought that an extruder could not be used to reprocess them and it is surprising that an extruder will work for this purpose.

In the instant invention, an extruder can be used as a chemical reactor to carry out two consecutive reactions in tandem, instead of as a conventional melting device. First, upon the addition of water and an infusible, insoluble alkyd resin, the extruder converts a part or whole of the alkyd resin into a liquid comprising monomers and oligomers of low molecular weight, which are no longer cross-linked. This liquid is termed "prepolymer." The prepolymer liquid, compatible with conventional extrusion process steps (e.g., mixing, kneading, shearing, and conveying), is then subjected to the second stage of chemical reaction, which is the temperature-driven ester condensation reaction triggered and driven by the removal of water, which is liberated as a by-product of the condensation. Without the aid of such chemical reactions-reactions not achieved with thermosets-superimposed on the physical manipulation of resins, the introduction of an infusible, insoluble resin into a melt extruder will not produce articles of desired shape and forms.

This reprocessing of alkyd resins allows, for the first time, the preparation of alkyd resin articles traditionally made with thermoplastics such as, for example, pellets, sheets, films, fibers, nonwovens, and molded articles to be used for unconventional applications such as, for example, packages, hygiene products, tapes and fabrics. These products are contemplated to provide many advantages over similar products formed from thermoplastic resins because they have superior mechanical, chemical, and thermal stability. For example, the reformed alkyd resin articles do not deform or creep, even at elevated temperatures, and they do not appreciatively swell when exposed to solvent. The reprocessing of alkyd resins also provides a method for recycling alkyd resins. Recycling alkyd resins reduces the amount of alkyd resin waste that is formed during processing, reduces the amount of water that is required during processing, and results in cost savings.

In one aspect, the invention relates to a method of forming a reformed alkyd resin from an infusible, insoluble alkyd resin via an extruder, for example. In this method, an infusible, insoluble alkyd resin is fed into an extruder along with water. The infusible, insoluble alkyd resin is depolymerized, without melting the alkyd resin, in the extruder by heating it and the water under high shear (e.g. about 100 s⁻¹ to about 5000 s⁻¹). As used in this aspect of the invention, the term "melting" is used to define a process wherein crystalline structure becomes amorphous. Depolymerization of the alkyd resin results in a prepolymer liquid that includes monomers and oligomers of a polyol and an excipient selected from the group consisting of a polyfunctional acid, an anhydride, and mixtures thereof. The prepolymer liquid is then extruded through a die of the extruder to provide an extrudate. The extrudate has the same ratio of oligomers to monomers as the prepolymer liquid that is formed from the depolymerization of the alkyd resin. Finally, water, which forms as a by-product of the condensation reaction, is evaporated from the extrudate to promote condensation of the polyol with the excipient to result in the reformed alkyd resin.

In some embodiments of this aspect of the invention, the infusible, insoluble alkyd resin undergoes complete depolymerization and results in a prepolymer liquid that includes monomers of the polyol and the excipient. In some embodiments, the infusible, insoluble alkyd resin does not undergo complete depolymerization and results in a prepolymer liquid that includes monomers, oligomers, and cross-linked oligomers of the polyol and the excipient. In this embodiment, the prepolymer mixture is sufficiently fluid for reprocessing and can include residual alkyd resin powders. These alkyd resin powders can act as fillers with superb surface affinity to the reforming alkyd resin.

Also according to this aspect of the invention, the amount of water that can be fed into the extruder preferably is about 0.1 wt.% to about 10 wt.%, more preferably about 1 wt.% to about 5 wt.%, based on the total weight of the materials fed to the extruder.

In some embodiments, the amount water that can be fed into the extruder is simply an amount that the infusible, insoluble alkyd resin absorbed from the atmosphere. In some embodiments, the amount of water that can be fed into the extruder is in a one-to-one molar ratio with the number of ester bonds of the infusible, insoluble alkyd resin that will undergo hydrolysis. In some embodiments, the amount of water that is fed into the extruder is in excess of that molar ratio and the unused water can be flashed off at the end of the process.

The infusible, insoluble alkyd resin, water, and the prepolymer liquid, can be heated to a temperature that promotes (i) depolymerization of the alkyd resin, and (ii) condensation of the oligomers and monomers of the prepolymer liquid in the extruder. In some embodiments, the infusible, insoluble, alkyd resin, water and the prepolymer liquid preferably are heated to a temperature of about 100 °C to about 300 °C, more preferably about 180 °C to about 220 °C.

In some embodiments of this aspect of the invention, water is optionally removed from the prepolymer liquid (via vent ports that are positioned along the length of the extruder) before extrusion of the extrudate. This removal of water from the prepolymer liquid functions to rebuild the molecular weight of the prepolymer, but is discontinued before the prepolymer liquid reaches its gel point. In these embodiments, the extrudate has a higher ratio of oligomers to monomers than the prepolymer liquid. The optional removal of water from the prepolymer liquid before extrusion is advantageous because complete crosslinking of the hot extrudate will occur faster than if no water removal occurred in the extruder.

In some embodiments of this aspect of the invention, a catalyst can be added to the extruder along with the infusible, insoluble alkyd resin and water. The catalyst aids in accelerating both ester hydrolysis and ester condensation, and can be a Lewis acid, such as stannous octoate and aluminum chloride, or an organic acid, such as a sulfonic acid. Nonlimiting examples of sulfonic acids that can be used as catalysts for the reprocessing of alkyd resins include methanesulfonic acid, *p*-toluenesulfonic acid, benzenesulfonic acid, chlorosulfonic acid, ethanesulfonic acid, aniline-2-sulfonic acid, dodecylbenzenesulfonic acid, poly(4-styrenesulfonic acid), and mixtures thereof. The catalyst is present (if at all) in an amount that is about 0.05 wt.% to about 2 wt.%, based on the total weight of the materials fed into the extruder.

The infusible, insoluble alkyd resin that is fed into the extruder is cross-linked with ester bonds formed by the condensation of polyols with an excipient selected from the group consisting of polyfunctional acids, anhydrides, and a mixture of polyfunctional acids and anhydrides. Preferably, the infusible, insoluble alkyd resin does not contain a substantial amount of functional groups that can cause cross-linking by free radical addition chemistry (i.e. no more than 10 wt.% of carbon-carbon bonds are alkenes and/or alkynes). When the excipient is a polyfunctional acid, the molar ratio of total acid moieties on the polyfunctional acid to alcohol moieties on the polyol is about 10:1 to about 1:10, more preferably about 3:1 to about 1:3, and even more preferably about 1:1. When the excipient is an anhydride, the molar ratio of total anhydride moieties on the anhydride to total alcohol moieties on the polyol is about 5:1 to about 1:5, preferably about 1.5:1 to about 1:1.5 even more preferably about 0.5: 1.

The polyol preferably is a molecule that includes at least two alcohol moieties, preferably at least three alcohol moieties. Preferably, the alcohol moieties are primary hydroxyl groups. Nonlimiting examples of polyols include glycerol, 1,3-propanediol, pentaerythritol, dipentaerythritol, trimethylolpropane, trimethylolethane, ethylene glycol, diethylene glycol, polyglycerol, diglycerol, triglycerol, 1,2-propanediol, 1,4-butanediol, neopentylglycol, hexanediol, hexanetriol, erythritol, xylitol, malitol, mannitol, polyvinyl alcohol, and mixtures thereof. In some specific embodiments, the polyol is selected from the group consisting of glycerol, pentaerythritol, trimethylolpropane, trimethylolethane, and mixtures thereof.

The excipient is selected from the group consisting of a polyfunctional acid, an anhydride, and mixtures thereof. The polyfunctional acid preferably is a molecule that includes at least two carboxylic acid moieties, more preferably at least three carboxylic acid moieties. The anhydride preferably is a molecule that includes at least one anhydride moiety. Nonlimiting examples of the excipient include adipic acid, maleic acid, succinic acid, sebacic acid, suberic acid, fumaric acid, glutaric acid, phthalic acid, malonic acid, isophthalic acid, terephthalic acid, azelaic acid, dimer acid, dimethylolpropionic acid, maleic anhydride, succinic anhydride, phthalic anhydride, trimellitic anhydride, polyacrylic acid, polymethacrylic acid, and mixtures thereof. In some specific embodiments, the excipient is an anhydride selected from the group consisting of maleic anhydride, succinic anhydride, phthalic anhydride, and mixtures thereof.

The reformed alkyd resin is infusible and insoluble and preferably is in a shape selected from the group consisting of a pellet, sheet, film, fiber, nonwoven, or a molded article. A "reformed alkyd resin" is an alkyd resin that has undergone thermal reprocessing to result in an alkyd resin that has a different shape or form than the resin had prior to reprocessing. "Thermal reprocessing" is the process of depolymerizing a part or whole of an infusible, insoluble alkyd resin into prepolymer liquid through ester hydrolysis using heat and water, and the subsequent repolymerization of the prepolymer liquid into an alkyd resin with a new shape or form by a temperature driven ester condensation reaction that is triggered and driven by the removal of water that is liberated as a by-product of condensation. "Ester hydrolysis" is a nucleophilic acyl substitution reaction wherein water forms a bond to a carbonyl carbon of an ester to result in a tetrahedral intermediate. The tetrahedral intermediate subsequently reforms the acyl group while eliminating alcohol to result in a carboxylic acid and an alcohol. Ester hydrolysis is the reverse of ester condensation and is driven by an excess of water. "Ester condensation" is a nucleophilic acyl substitution reaction wherein alcohol forms a bond to a carbonyl carbon of a carboxylic acid or a carboxylic acid derivative to form a tetrahedral intermediate. The tetrahedral intermediate subsequently reforms the acyl group while eliminating water to result in an ester. Ester condensation is the reverse of ester hydrolysis and is driven by the removal of water.

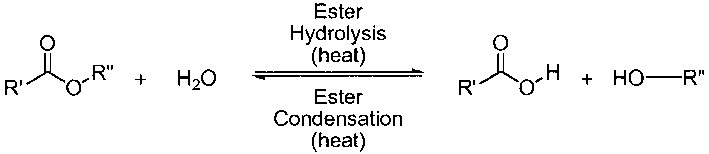

In accordance with the invention, infusible, insoluble alkyd resins can be reprocessed into pellets. As used herein, a "pellet" is a small particle comprised of densely packed alkyd resin having at least one cross-sectional plane with a dimension of about 0.20 cm to about 0.75 cm, and a longitudinal axis that is perpendicular to the cross-sectional plane with a dimension of about 0.20 cm to about 1.5 cm. A "cross-sectional plane" is a two-dimensional section of the pellet that is perpendicular to the longitudinal axis of the pellet. "Longitudinal axis" is a straight, imaginary line lengthwise through the center of the pellet. The longitudinal axis can have a dimension that is either the same size or larger than the dimension of the cross-sectional plane.

In some embodiments, the pellet has an effective diameter that is less than about 0.75 cm. The "effective diameter" in the longest path through the center of the pellet from one side to another that is perpendicular to the longitudinal axis. In some embodiments, the pellet has an effective diameter that is less than about 0.63 cm and greater than about 0.20 cm

In some embodiments of the invention, the pellet has a shape selected from the group consisting of right circular cylindrical, ellipsoid, spheroid, obround, and ovoid. As used herein, "right circular cylindrical" refers to a three-dimensional body with parallel circular bases and a wall of constant circular cross-section. "Ellipsoid" refers to a body of which all plane sections are ellipses or circles. "Spheroid" refers to a body of revolution generated by rotating a circle about a diameter. "Obround" refers to a three-dimensional figure having two parallel sides and two semicircular ends. "Ovoid" refers to a body that is shaped like an egg.

Reforming infusible, insoluble alkyd resins into pellets is highly advantageous. Pelletized alkyd resins are in a form that can be fed back into an extruder for reprocessing. Therefore, pelletized alkyd resins can themselves be reformed into forms and shapes selected from the group consisting of sheets, films, fibers, nonwovens, and molded articles. Pelletized alkyd resins can further be reprocessed into new pellets or other reformed alkyd resins containing additives, such as, for example salts, slip agents, odor masking agents, cross-linked agents, emulsifiers, surfactants, cyclodextrins, optical brighteners, antioxidants, flame retardants, dyes, pigments, fillers, proteins and their alkali salts, waxes, tackifying resins, extenders, and mixtures thereof. In addition, the pelletized form of alkyd resins is convenient for storing and shipping the alkyd resins for later reprocessing.

In accordance with the invention, infusible, insoluble alkyd resins can be reprocessed into sheets. As used herein, "sheets" are flat materials comprised of infusible, insoluble alkyd resins with a gauge of at least 250 microns. Sheets typically have thicknesses of about 0.5 mm to about 15 mm, widths greater than about 50 mm, and no length limitations. Thin sheets can be used for packaging applications such as, for example, drink cups, deli containers, produce trays, baby wipe containers and margarine tubs. Thick sheets can be used for recreational applications such as, for example, truck bed liners, pallets, automotive dunnage, playground equipment, and boats. Sheets can be used for thermal insulation materials for walls, roofs, and under floors, in the manufacturing of luggage, refrigerator liners and shower units, and in geomembranes, where the sheet can be welded into large containment systems for mining applications and municipal waste disposal.

In accordance with the invention, infusible, insoluble alkyd resins are reprocessed into films. As used herein, "films" are flat materials comprised of infusible, insoluble alkyd resins with a gauge of less than about 250 microns. Films typically have thicknesses of less than about 0.5 mm, widths greater than about 50 mm, and no length limitations. Films are typically used in the packaging, agricultural, and building industries, and in the manufacture of tapes. Films are particularly used for food packaging.

In accordance with the invention, infusible, insoluble alkyd resins can be reprocessed into fibers. As used herein, a "fiber" is a slender and greatly elongated material having a diameter of about 0.1 micron to about 200 microns and comprised of infusible, insoluble alkyd resins. Fibers are capable of being spun into yarn, twine, or rope, and are typically used in tape manufacture such as for carpet backings, carpets, for synthetic grass, and for the manufacture of nonwovens.

Thus, also in accordance with the invention, infusible, insoluble alkyd resins can be reprocessed into nonwovens. As used herein, "nonwovens" are planar structures that are relatively flat, flexible, and porous. Nonwovens are comprised of individual infusible, insoluble alkyd resin fibers or threads which are interlaid, but not in a regular or identifiable manner as in a knitted fabric. Nonwovens are used for geotextiles (fabrics used as road beds and erosion prevention systems), protective clothing, reinforcement fabrics, coverstock, filtration fabrics, roofing, automobile carpet backing, laundry aids, home-furnishings, and regular carpet backing.

Still further, in accordance with the invention, infusible, insoluble alkyd resins are reprocessed into molded articles. As used herein, "molded articles" are hollow materials comprised of infusible, insoluble alkyd resins. Molded articles can be used for applications such as, for example, dairy containers, bottles, hoses, pipes, and drums.

The ability to thermally reprocess alkyd resins now allows these resins to be used advantageously to form articles traditionally made with thermoplastics. These new alkyd resin articles cover a wide range of applications as disclosed herein. In addition, the new articles made from reprocessed alkyd resins offer significantly enhanced mechanical, chemical, and thermal stability over the corresponding thermoplastic articles.

In this aspect of the invention, the infusible, insoluble alkyd resin that is fed into the extruder can be in a form selected from the group consisting of powders, pellets, and scrap. As used herein in this context, a "powder" is a solid substance in the form of tiny, loose particles. A powder can be formed by pulverizing or grinding another form of an alkyd resin, such as a pelletized alkyd resin, by any standard grinding or pulverizing method. In some embodiments, an alkyd resin powder is fed directly into the extruder. A pelletized alkyd resin can be fed directly into the extruder, or it can be ground to a powder to increase its surface area before being fed into the extruder.

Scrap alkyd resin can be fed into the extruder for thermal reprocessing into reformed alkyd resin. As used herein "scrap" alkyd resin is discarded waste material and can be in any form such as chips, chunks, pulverized articles, powders, and mixtures thereof. As used herein, a "chip" is a small, broken or cut off piece of an alkyd resin. As used herein, a "chunk" is a short, thick, piece of scrap alkyd resin. As used herein, "pulverized articles" are forms of alkyd resins that have been pounded, crushed, or ground to a powder or a dust. In some embodiments, the scrap alkyd resin is reformed into pelletized alkyd resin.

In the alkyd resin manufacturing industry, a large amount of scrap alkyd resin forms during processing. Using the method disclosed herein, the scrap alkyd resin can now be reformed by thermal reprocessing into fresh alkyd resin materials. Clearly, the ability to recycle scrap alkyd resins is advantageous due to the resulting cost savings and environmental impact.

In another aspect, the invention relates to a method of forming a reformed alkyd resin from an infusible, insoluble alkyd resin without the use of an extruder. In this method, an infusible, insoluble alkyd resin is depolymerized, without melting the alkyd resin, by heating it and water under high shear (e.g. about 100 s⁻¹ to about 5000 s⁻¹). Depolymerization of the alkyd resin results in a prepolymer liquid that includes monomers and oligomers of a polyol and an excipient selected from the group consisting of a polyfunctional acid, an anhydride, and mixtures thereof. Water is evaporated from the prepolymer liquid to promote condensation of the polyol with the excipient to result in the reformed alkyd resin. The infusible, insoluble alkyd resin that undergoes thermal reprocessing can be in a form selected from the group consisting of powders, pellets, and scrap, as described herein. The reformed alkyd resin is an infusible and insoluble alkyd resin that has undergone thermal reprocessing

In some embodiments of this aspect of the invention, the method is performed under atmospheric pressure. In preferred embodiments of this aspect of the invention, however, the method is performed at elevated pressure. Performing the method at elevated pressure is advantageous because the reaction temperature can be increased to above 100 °C without water evaporation while the prepolymer liquid is formed. In some embodiments of this aspect of the invention, the method is performed using an autoclave or pressure cooker.

In some embodiments of this aspect of the invention, the infusible, insoluble alkyd resin undergoes complete depolymerization and results in prepolymer liquid that includes monomers of the polyol and the excipient. In some embodiments, the infusible, insoluble alkyd resin does not undergo complete depolymerization and results in a prepolymer liquid that includes monomers, oligomers, and cross-linked oligomers of the polyol and the excipient. In this embodiment, the prepolymer mixture is sufficiently fluid for reprocessing and can include residual alkyd resin powders. These alkyd resin powders in the prepolymer liquid can act as fillers with superb surface affinity to the reforming alkyd resin.

In this aspect of the invention, the amount of water that is heated with the infusible, insoluble alkyd resin is preferably about 0.1 wt.% to about 10 wt.%, more preferably about 1 wt.% to about 5 wt.%, based on the total weight of the materials being reprocessed. In some embodiments, the amount water that is heated with the infusible, insoluble alkyd resin is simply an amount that the infusible, insoluble alkyd resin absorbed from the atmosphere. In some embodiments, the amount of water that is heated with the infusible, insoluble alkyd resin is in a one-to-one molar ratio with the number of ester bonds that comprise the alkyd resin. In some embodiments, the amount of water that is heated with the infusible, insoluble alkyd resin is in excess of that molar ratio, and the unused water can be flashed off at the end of the process.

In this aspect of the invention, the infusible, insoluble alkyd resin, water, and prepolymer liquid can be heated to a temperature that promotes (i) depolymerization of the alkyd resin, and (ii) condensation of the oligomers and monomers of the prepolymer liquids. In some embodiments, the infusible, insoluble, alkyd resin, water, and prepolymer liquid preferably are heated to a temperature of about 100 °C to about 300 °C, more preferably about 180 °C to about 220 °C.

In some embodiments of this aspect of the invention, a catalyst can be added to the mixture of the infusible, insoluble alkyd resin and water. The catalyst aids in accelerating both ester hydrolysis and ester condensation, and can be a Lewis acid or an organic acid, such as a sulfonic acid, as previously described herein. The catalyst is present (if at all) in an amount that is about 0.05 wt.% to about 2 wt.%, based on the total weight of the materials fed into the extruder.

The infusible, insoluble alkyd resin of this aspect of the invention is cross-linked with ester bonds formed by the condensation of polyols with an excipient selected from the group consisting of polyfunctional acids, anhydrides, and a mixture of polyfunctional acids and anhydrides. Preferably, the infusible, insoluble alkyd resin does not contain a substantial amount of functional groups that can cause cross-linking by free radical addition chemistry (i.e. no more than 10 wt.% of carbon-carbon bonds are alkene and/or alkynes). When the excipient is a polyfunctional acid, the molar ratio of total acid moieties on the polyfunctional acid to alcohol moieties on the polyol is as previously described herein. When the excipient is an anhydride, the molar ratio of total anhydride moieties on the anhydride to total alcohol moieties on the polyol is as previously described herein.

The polyol in this aspect of the invention preferably is a molecule that includes at least two alcohol moieties, more preferably at least three alcohol moieties, as previously described herein. Preferably, the alcohol moieites are primary hydroxyl groups. The excipient in this aspect of the invention is selected from the group consisting of a polyfunctional acid, an anhydride, and mixtures thereof. The polyfunctional acid preferably is a molecule that includes at least two carboxylic acid moieties, more preferably at least three carboxylic acid moieties, as previously described herein. The anhydride preferably is a molecule that includes at least one anhydride moiety, as previously described herein.

Also disclosed herein (but not claimed as such) are reformed alkyd resins. As previously described, a "reformed alkyd resin" is an alkyd resin that has undergone thermal reprocessing to result in an alkyd resin that has a different shape or form than the resin had prior to reprocessing. The reformed alkyd resin is an infusible, insoluble material that is made up of ester cross-links. The ester cross-links are formed by the condensation between a polyol and a polyfunctional acid, an anhydride, or mixtures thereof. The polyol that preferably is used to form the ester cross-links of the reformed alkyd resin is a molecule that includes at least two alcohol moieties, more preferably at least three alcohol moieties, as previously described herein. Preferably, the alcohol moieties are primary hydroxyl groups. The polyfunctional acid that is used to form the ester cross-links preferably is a molecule that includes at least two carboxylic acid moieties, more preferably at least three carboxylic acid moieties, as previously described herein. The anhydride that forms the ester cross-links preferably is a molecule that includes at least one anhydride moiety, as previously described herein.

When the ester cross-links are the result of the condensation between a polyfunctional acid and polyol, the molar ratio of total acid moieties on the polyfunctional acid to alcohol moieties on the polyol is about 10:1 to about 1:10, preferably about 3:1 to about 1:3, and more preferably about 1:1. When the ester cross-links are the result of the condensation between an anhydride and a polyol, the molar ratio of total anhydride moieties on the anhydride to total alcohol moieties on the polyol preferably is about 5:1 to about 1:5, preferably about 1.5:1 to about 1:1.5, and more preferably about 0.5:1.

The reformed alkyd resin may be in a shape selected from the group consisting of a pellet, sheet, film, fiber, nonwoven, or a molded article, as described herein.

Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

### EXAMPLES

The following examples are provided to illustrate the invention, but are not intended to limit the scope thereof. The experiment described in Example 1 demonstrates the formation of a glycerol-maleate alkyd oligomer that is used as a starting material to form pelletized alkyd resins. The experiment described in Example 2 demonstrates the formation of pelletized alkyd resin from the glycerol-maleate alkyd oligomer of Example 1. The experiment described in Example 3 demonstrates the formation of glycerol-maleate alkyd resin fibers from the pelletized alkyd resin of Example 2. The experiment described in Example 4 demonstrates the formation of glycerol-maleate alkyd resin sheets from the pelletized alkyd resin of Example 2. The experiment described in Example 5 demonstrates the formation of glycerol-maleate alkyd resin film from the pelletized alkyd resin of Example 2. The experiment described in Example 6 demonstrates the formation of glycerol-maleate alkyd resin nonwovens from the pelletized alkyd resin of Example 2. The experiment described in Example 7 demonstrates the formation of glycerol-maleate alkyd resin molded articles from the pelletized alkyd resin of Example 2. The experiment described in Example 8 demonstrates the reprocessing of scrap alkyd resin into reformed, pelletized alkyd resin.

### Example 1

In this example, a glycerol-maleate alkyd oligomer starting material is prepared. Glycerol (20.7 kg, P&G Chemicals) was added to a large glass reactor and then warmed to 60 °C. The headspace of the glass reactor was continuously purged with a stream of nitrogen. A condenser was attached to the reactor and a graduated cylinder was placed on a balance at the opening of the condenser. Maleic anhydride (22.0 kg, Aldrich) was placed in a large bucket and liquefied by warming it in an oven at 60 °C. The liquefied maleic anhydride was transferred to the reactor containing glycerol. The resulting mixture was stirred and its temperature was slowly raised from 60 °C to about 160-170 °C. This temperature was maintained while the water that was generated during the reaction was collected in the graduated cylinder. The reaction was arrested after about 2 kg of water had been collected, which corresponds to about 50% reaction completion. The resulting material was soluble in acetone and dispersible in hot water.

### Example 2

In this example, the glycerol-maleate oligomer from Example 1 is formed into an alkyd resin in an extruder and then pelletized. The glycerol-maleate oligomer from Example 1 was warmed to promote additional crosslinking and then cut into small pieces. These small pieces were fed into a twin screw compound extruder with the heating profile in the below table.

| | | | | | | | | | |
|---|---|---|---|---|---|---|---|---|---|
| °C | 190 | 200 | 200 | 200 | 200 | 200 | 200 | 160 | 140 |
| Zone | 2 | 3 | 4 | 5 | 6 | 7 | 8 | 9 | Dye |

All vent ports of the extruder were plugged and the screw speed was set at 200 rpm. The extruded glycerol-maleate material was quenched on a cooling table upon exiting the extruder and subsequently fed into a pelletizer (Conair). The resulting pellets were collected in a suitable container. The pellets were infusible and no longer soluble in solvents such as water, acetone, ethyl acetate, chloroform, and tetrahydrofuran, even upon prolonged immersion (> 24 hours).

### Example 3

In this example, the pelletized glycerol-maleate alkyd resin of Example 2 is reprocessed into a fiber. The glycerol-maleate alkyd resin pellets were equilibrated in ambient atmosphere and fed into a 4-hole test stand (Hills) with the packs set at 190 °C. The white to white-yellow alkyd resin fibers exited the holes and were collected. The glycerol-maleate alkyd resin fibers were insoluble in solvents and infusible.

### Example 4

In this example, the pelletized glycerol-maleate alkyd resin of Example 2 is reprocessed into a sheet. The glycerol-maleate alkyd resin pellets are equilibrated in ambient atmosphere and moisture (0.1 wt.% or greater) and fed into the hopper of a scaled extruder equipped with a general purpose screw. Extruder zones are heated to about 190 °C to about 220 °C. The temperature is generally increased as the alkyd material is conveyed through the barrel. Screw speed ranges from about 100-900 rpm. The alkyd resin exits the extruder through a flat sheet dye with a gap of about 0.5 mm to about 15.0 mm and with widths greater than about 50 mm. The extruded sheet passes through a series of rolls and is collected on a windup system forming a roll of material. The glycerol-maleate alkyd resin sheets are insoluble in solvents and infusible.

### Example 5

In this example, the pelletized glycerol-maleate alkyd resin of Example 2 is reprocessed into a film. The glycerol-maleate alkyd resin pellets are equilibrated in ambient atmosphere and moisture (0.1 wt.% or greater) and fed into the hopper of a sealed extruder equipped with a general purpose screw. Extruder zones are heated to about 190 °C to about 220 °C. The temperature is generally increased as the alkyd material is conveyed through the barrel. Screw speed ranges from about 100-900 rpm. The alkyd resin exits the extruder through a flat film dye with a gap of less than 0.5 mm and with widths greater than 50 mm. The extruded sheet passes through a series of heated rolls allowing for further thinning of the film, if desired, and then through chilled rolls to the cool the film. Finally, film is collected on a windup system forming a roll of material that is insoluble in solvents and infusible.

### Example 6

In this example, the pelletized glycerol-maleate alkyd resin of Example 2 is reprocessed into nonwovens. The glycerol-maleate alkyd resin pellets are equilibrated in ambient atmosphere and moisture (0.1 wt.% or greater) and fed into the hopper of a sealed extruder equipped with a general purpose screw. Extruder zones are heated to about 190 °C to about 220 °C. The temperature is generally increased as the alkyd material is conveyed through the barrel. Screw speed ranges from about 100-900 rpm. The polymer exits the extruder and passes through a spinneret forming fibers. These fibers are quenched by cool air and attenuated to orient them by accelerating them through a slot jet. Fibers are collected on a moving belt. Fibers from the moving belt are then bonded via mechanical needling or hydraulic entanglement forming a nonwoven web. This nonwoven web is finally collected on a windup system forming a roll of material that is insoluble in solvents and infusible.

### Example 7

In this example, the pelletized glycerol-maleate alkyd resin of Example 2 is reprocessed into a molded article. The glycerol-maleate alkyd resin pellets are equilibrated in ambient atmosphere and moisture (0.1 wt.% or greater) and fed into the hopper of a sealed extruder equipped with a general purpose screw. Extruder zones are heated to about 190 °C to about 220 °C. The temperature is generally increased as the alkyd material is conveyed through the barrel. Screw speed ranges from about 100-900 rpm. Molten alkyd is extruded into a hollow tube called a parison, enclosed in a cooled metal mold. Air is then blown into the parison, inflating it into the shape of the mold. Upon cooling, the mold is opened and the part, which is insoluble in solvents and infusible, is ejected.

### Example 8

In this example, scrap glycerol-maleate alkyd resin is reprocessed into a reformed alkyd resin pellet. Glycerol-maleate alkyd resin scrap is fed into a twin screw compound extruder. All vent ports of the extruder were plugged and the screw speed is set at 200 rpm. The extruded glycerol-maleate material is quenched on a cooling table upon exiting the extruder and subsequently fed into a pelletizer (Conair). The resulting pellets arre collected in a suitable container. The pellets are infusible and no longer soluble in solvents such as water, acetone, ethyl acetate, chloroform, and tetrahydrofuran, even upon prolonged immersion (> 24 hours).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document, the meaning or definition assigned to that term in this document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method of reforming alkyd resins, the method comprising:
(a) feeding water and an infusible, insoluble alkyd resin into an extruder;
(b) heating and mixing under high shear in the extruder the resin and water, without melting the resin, to a temperature sufficient to promote depolymerization of the resin into a prepolymer liquid comprising monomers and oligomers of polyols and excipients selected from the group consisting of polyfunctional acids, anhydrides, and mixtures thereof;
(c) extruding through a die of the extruder an extrudate comprising monomers and oligomers of polyols and excipients selected from the group consisting of polyfunctional acids, anhydrides, and mixtures thereof; and,
(d) evaporating water from the extrudate to promote condensation of the monomers and oligomers of polyols and the excipient of the extrudate to form the reformed alkyd resin.

2. The method of claim 1, wherein the extrudate has the same ratio of oligomers to monomers as the prepolymer liquid.

3. The method of claim 1 or 2, wherein water is removed from the prepolymer liquid between steps (b) and (c) to promote condensation of the monomers and oligomers of polyols and the excipient, wherein the removal of water is subsequently stopped before the first prepolymer liquid reaches its gel point.

4. The method of any of claims 1-3, wherein the extrudate has a higher ratio of oligomers to monomers than the prepolymer liquid.

5. The method of any of claims 1-4, comprising adding a catalyst to the extruder in step (a), wherein the catalyst accelerates ester hydrolysis and ester condensation, preferably wherein the catalyst is a sulfonic acid, more preferably wherein the sulfonic acid catalyst is selected from the group consisting of methanesulfonic acid, *p*-toluenesulfonic acid, benzenesulfonic acid, chlorosulfonic acid, ethanesulfonic acid, aniline-2-sulfonic acid, dodecylbenzenesulfonic acid, poly(4-styrenesulfonic acid), and mixtures thereof.

6. The method of any of claims 1-5, wherein the infusible, insoluble alkyd resin that is fed into the extruder is in a form selected from the group consisting of pellets, powders, chips, chunks, scraps, pulverized articles, and mixtures thereof, preferably a pellet.

7. The method of any of claims 1-6, wherein the reformed alkyd resin is in a form selected from the group consisting of pellets, films, sheets, fibers, nonwovens, and molded articles, preferably a pellet.

8. The method of any of claims 1-7, wherein the resin, water, and prepolymer liquid in step (b) is heated to a temperature of from 100 °C to 300 °C, preferably from 180 °C to 220 °C.

9. The method of any of claims 1-8, wherein the shear is from 100 s⁻¹ to 5000 s⁻¹.

10. The method of any of claims 1-9, wherein water is present in step (a) in an amount of 0.1 wt.% to 10 wt.%, preferably from 1 wt.% to 5 wt.%, based on the total weight of materials fed to the extruder.

11. The method of any of claims 1-10, wherein the polyol is selected from the group consisting of glycerol, 1,3-propanediol, pentaerythritol, dipentaerythritol, trimethylolpropane, trimethylolethane, ethylene glycol, diethylene glycol, polyglycerol, diglycerol, triglycerol, 1,2-propanediol, 1,4-butanediol, neopentylglycol, and hexanediol, hexanetriol, erythritol, xylitol, maltitol, mannitol, polyvinyl alcohol, and mixtures thereof, preferably from the group consisting of glycerol, pentaerythritol, trimethylolpropane, trimethylolethane, and mixtures thereof.

12. The method of any of claims 1-11, wherein the excipient is selected from the group consisting of adipic acid, maleic acid, succinic acid, sebacic acid, suberic acid, fumaric acid, glutaric acid, phthalic acid, malonic acid, isophthalic acid, terephthalic acid, azelaic acid, dimethylolpropionic acid, maleic anhydride, succinic anhydride, phthalic anhydride, trimellitic anhydride, polyacrylic acid, polymethacrylic acid, and mixtures thereof, preferably from the group consisting of maleic anhydride, succinic anhydride, phthalic anhydride, and mixtures thereof.

13. The method of any of claims 1-12, wherein the molar ratio of total acid moieties on the polyfunctional acid to total alcohol moieties on the polyol is from 10:1 to 1:10, preferably from 3:1 to 1:3, more preferably 1:1.

14. The method of any of claims 1-13, wherein the molar ratio of total anhydride moieties on the anhydride compound to total alcohol moieties on the polyol is from 5:1 to 1:5, preferably from 1.5:1 to 1:1.5, more preferably 0.5:1.

15. A method of making a reformed alkyd resin, the method comprising:
(a) simultaneously heating and mixing under high shear water and an infusible , insoluble alkyd resin, without melting the resin, to a temperature sufficient to promote depolymerization of the resin into a prepolymer liquid comprising monomers and oligomers of polyols and excipients selected from the group consisting of polyfunctional acids, anhydrides, and mixtures thereof; and,
(b) evaporating water to promote condensation of the monomers and oligomers of polyols and excipients selected from the group consisting of polyfunctional acids, anhydrides, and mixtures thereof of the prepolymer liquid to form the reformed alkyd resin.

## Patentansprüche

1. Verfahren zum Reformieren von Alkydharzen, umfassend:
(a) Zuführen von Wasser und einen unerweichbaren unlöslichen Alkydharz in eine Strangpresse;
(b) Erwärmen und Mischen des Harzes und des Wassers unter hoher Scherung in der Strangpresse, ohne das Harz zu schmelzen, auf eine Temperatur, die ausreicht, um die Depolymerisierung des Harzes zu einer Präpolymerflüssigkeit zu fördern, die Monomere und Oligomere von Polyolen und Hilfsstoffen ausgewählt aus der Gruppe von polyfunktionellen Säuren, Anhydriden und Mischungen davon umfasst;
(c) Extrudieren eines Extrudats, das Monomere und Oligomere von Polyolen und Hilfsstoffen ausgewählt aus der Gruppe bestehend aus polyfunktionellen Säuren, Anhydriden und Mischungen davon umfasst, durch eine Düse einer Strangpresse; und
(d) Verdampfen von Wasser aus dem Extrudat, um die Kondensation der Monomere und Oligomere von Polyolen und dem Hilfsstoff des Extrudats zu fördern, um das reformierte Alkydharz zu bilden.

2. Verfahren nach Anspruch 1, wobei das Extrudat das gleiche Verhältnis von Oligomeren zu Monomeren wie die Präpolymerflüssigkeit aufweist.

3. Verfahren nach Anspruch 1 oder 2, wobei zwischen den Schritten (b) und (c) Wasser aus der Präpolymerflüssigkeit entfernt wird, um Kondensation der Monomere und Oligomere von Polyolen und dem Hilfsstoff zu fördern, wobei die Entfernung von Wasser danach gestoppt wird, bevor die erste Präpolymerflüssigkeit ihren Gelpunkt erreicht.

4. Verfahren nach einem der Ansprüche 1 bis 3, wobei das Extrudat ein höheres Verhältnis von Oligomeren zu Monomeren als die Präpolymerflüssigkeit aufweist.

5. Verfahren nach einem der Ansprüche 1 bis 4, umfassend die Zugabe eines Katalysators zu der Strangpresse in Schritt (a), wobei der Katalysator Esterhydrolyse und Esterkondensation beschleunigt, wobei der Katalysator vorzugsweise Sulfonsäure ist und wobei der Sulfonsäurekatalysator mehr bevorzugt ausgewählt ist aus der Gruppe bestehend aus Methansulfonsäure, p-Toluolsulfonsäure, Benzolsulfonsäure, Chlorschwefelsäure, Ethansulfonsäure, Anilin-2-sulfonsäure, Dodecylbenzolsulfonsäure, Poly(4-styrolsulfonsäure) und Mischungen davon.

6. Verfahren nach einem der Ansprüche 1 bis 5, wobei das unerweichbare unlösliche Alkydharz, das in die Strangpresse eingespeist wird, in einer Form ausgewählt aus der Gruppe bestehend aus Pellets, Pulvern, Chips, Brocken, Verschnitt, pulverisierten Artikeln und Mischungen davon vorliegt, vorzugsweise als Pellet.

7. Verfahren nach einem der Ansprüche 1 bis 6, wobei das reformierte Alkydharz in einer Form ausgewählt aus der Gruppe bestehend aus Pellets, Folien, Lagen, Fasern, Vliesmaterial und gegossenen Artikeln vorliegt, vorzugsweise als Pellet.

8. Verfahren nach einem der Ansprüche 1 bis 7, wobei das Harz, das Wasser und die Präpolymerflüssigkeit in Schritt (b) auf eine Temperatur von 100 °C bis 300 °C, vorzugsweise 180 °C bis 220 °C erwärmt wird.

9. Verfahren nach einem der Ansprüche 1 bis 8, wobei die Scherung 100 s⁻¹ bis 5000 s⁻¹ beträgt.

10. Verfahren nach einem der Ansprüche 1 bis 9, wobei in Schritt (a) Wasser in einer Menge von 0,1 Gew.-% bis 10 Gew.%, vorzugsweise von 1 Gew.-% bis 5 Gew.-%, bezogen auf das Gesamtgewicht der in die Strangpresse eingespeisten Materialien, vorliegt.

11. Verfahren nach einem der Ansprüche 1 bis 10, wobei das Polyol ausgewählt ist aus der Gruppe bestehend aus Glycerin, 1,3-Propandiol, Pentaerythritol, Dipentaerythritol, Trimethylolpropan, Trimethylolethan, Ethylenglycol, Diethylenglycol, Polyglycerin, Diglycerol, Triglycerol, 1,2-Propandiol, 1,4-Butandiol, Neopentylglycol und Hexandiol, Hexantriol, Erythrit, Xylit, Maltit, Mannit, Polyvinylalkohol und Mischungen davon, vorzugsweise aus der Gruppe bestehend aus Glycerin, Pentaerythritol, Trimethylolpropan, Trimethylolethan und Mischungen davon.

12. Verfahren nach einem der Ansprüche 1 bis 11, wobei der Hilfsstoff ausgewählt ist aus der Gruppe bestehend aus Adipinsäure, Maleinsäure, Bernsteinsäure, Sebacinsäure, Suberinsäure, Fumarsäure, Glutarsäure, Phthalsäure, Malonsäure, Isophthalsäure, Terephthalsäure, Azelainsäure, Dimethylolpropionsäure, Maleinsäureanhydrid, Bernsteinsäureanhydrid, Phthalsäureanhydrid, Trimellitsäureanhydrid, Polyacrylsäure, Polymethacrylsäure und Mischungen davon, vorzugsweise aus der Gruppe bestehend aus Maleinsäureanhydrid, Bernsteinsäureanhydrid, Phthalsäureanhydrid und Mischungen davon.

13. Verfahren nach einem der Ansprüche 1 bis 12, wobei das Molverhältnis der gesamten Säureeinheiten an der polyfunktionellen Säure zu den gesamten Alkoholeinheiten am Polyol 10:1 bis 1:10, vorzugsweise 3:1 bis 1:3, und mehr bevorzugt 1:1 beträgt.

14. Verfahren nach einem der Ansprüche 1 bis 13, wobei das Molverhältnis von gesamten Anhydrideinheiten an der Anhydridverbindung zu gesamten Alkoholeinheiten am Polyol 5:1 bis 1:5, vorzugsweise 1,5:1 bis 1:1,5, mehr bevorzugt 0,5:1 beträgt.

15. Verfahren zum Herstellen eines reformierten Alkydharzes, wobei das Verfahren Folgendes umfasst:
(a) gleichzeitiges Erwärmen und Mischen unter hoher Scherung von Wasser und einem unerweichbaren unlöslichen Alkydharz, ohne das Harz zu schmelzen, auf eine Temperatur, die ausreicht, um die Depolymerisierung des Harzes zu einer Präpolymerflüssigkeit zu fördern, die Monomere und Oligomere von Polyolen und Hilfsstoffen ausgewählt aus der Gruppe bestehend aus polyfunktionellen Säuren, Anhydriden und Mischungen davon umfasst; und
(b) Verdampfen von Wasser, um die Kondensation der Monomere und Oligomere von Polyolen und Hilfsstoffen ausgewählt aus der Gruppe bestehend aus polyfunktionellen Säuren, Anhydriden und Mischungen davon der Präpolymerflüssigkeit zu fördern, um das reformierte Alkydharz zu bilden.

## Revendications

1. Procédé de reformage de résines alkyde, le procédé comprenant :
(a) l'alimentation d'eau et d'une résine alkyde insoluble infusible introduit dans une extrudeuse ;
(b) le chauffage et le mélange sous cisaillement élevé dans l'extrudeuse de la résine et de l'eau, sans fondre la résine, à une température suffisante pour promouvoir la dépolymérisation de la résine en un liquide prépolymère comprenant des monomères et oligomères de polyols et des excipients choisis dans le groupe constitué d'acides polyfonctionnels, anhydrides, et leurs mélanges ;
(c) l'extrusion à travers une filière de l'extrudeuse d'un extrudat comprenant des monomères et oligomères de polyols et des excipients choisis dans le groupe constitué d'acides polyfonctionnels, anhydrides, et leurs mélanges ; et,
(d) l'évaporation de l'eau de l'extrudat pour promouvoir la condensation des monomères et oligomères de polyols et de l'excipient de l'extrudat de façon à former la résine alkyde reformée.

2. Procédé selon la revendication 1, dans lequel l'extrudat a le même rapport d'oligomères sur monomères que le liquide prépolymère.

3. Procédé selon la revendication 1 ou 2, dans lequel l'eau est éliminée du liquide prépolymère entre les étapes (b) et (c) pour promouvoir la condensation des monomères et oligomères de polyols et de l'excipient, dans lequel l'élimination de l'eau est ultérieurement arrêtée avant que le premier liquide prépolymère atteigne son point de gel.

4. Procédé selon l'une quelconque des revendications 1 à 3, dans lequel l'extrudat a un rapport plus élevé d'oligomères sur monomères que le liquide prépolymère.

5. Procédé selon l'une quelconque des revendications 1 à 4, comprenant l'ajout d'un catalyseur à l'extrudeuse dans l'étape (a), dans lequel le catalyseur accélère l'hydrolyse d'ester et la condensation d'ester, de préférence dans lequel le catalyseur est un acide sulfonique, et plus préférablement dans lequel le catalyseur acide sulfonique est choisi dans le groupe constitué d'acide méthanesulfonique, acide p-toluènesulfonique, acide benzènesulfonique, acide chlorosulfonique, acide éthane-sulfonique, acide aniline-2-sulfonique, acide dodécylbenzènesulfonique, poly(acide 4-styrènesulfonique), et leurs mélanges.

6. Procédé selon l'une quelconque des revendications 1 à 5, dans lequel la résine alkyde insoluble infusible qui est alimentée dans l'extrudeuse est sous une forme choisie dans le groupe constitué de granulés, poudres, copeaux, gros morceaux, petits bouts, articles pulvérisés, et leurs mélanges, de préférence un granulé.

7. Procédé selon l'une quelconque des revendications 1 à 6, dans lequel la résine alkyde reformée est sous une forme choisie dans le groupe constitué de granulés, films, feuilles, fibres, non-tissés, et articles moulés, de préférence un granulé.

8. Procédé selon l'une quelconque des revendications 1 à 7, dans lequel la résine, l'eau, et le liquide prépolymère dans l'étape (b) sont chauffés à une température allant de 100 °C à 300 °C, de préférence de 180 °C à 220 °C.

9. Procédé selon l'une quelconque des revendications 1 à 8, dans lequel le cisaillement va de 100 s⁻¹ à 5000 s⁻¹.

10. Procédé selon l'une quelconque des revendications 1 à 9, dans lequel l'eau est présente dans l'étape (a) en une quantité de 0,1 % en poids à 10 % en poids, de préférence de 1 % en poids à 5 % en poids, sur base du poids total de matériaux introduits dans l'extrudeuse.

11. Procédé selon l'une quelconque des revendications 1 à 10, dans lequel le polyol est choisi dans le groupe constitué de glycérol, 1,3-propane-diol, pentaérythritol, dipentaérythritol, triméthylolpropane, triméthyloléthane, éthylène glycol, diéthylène glycol, polyglycérol, diglycérol, triglycérol, 1,2-propane-diol, 1,4-butane-diol, néopentylglycol, et hexanediol, hexanetriol, érythritol, xylitol, maltitol, mannitol, alcool polyvinylique, et leurs mélanges, de préférence dans le groupe constitué de glycérol, pentaérythritol, triméthylolpropane, trimethyloléthane, et leurs mélanges.

12. Procédé selon l'une quelconque des revendications 1 à 11, dans lequel l'excipient est choisi dans le groupe constitué d'acide adipique, acide maléique, acide succinique, acide sébacique, acide subérique, acide fumarique, acide glutarique, acide phtalique, acide malonique, acide isophtalique, acide téréphtalique, acide azélaïque, acide diméthylolpropionique, anhydride maléique, anhydride succinique, anhydride phtalique, anhydride trimellitique, acide polyacrylique, acide polyméthacrylique, et leurs mélanges, de préférence dans le groupe constitué d'anhydride maléique, anhydride succinique, anhydride phtalique, et leurs mélanges.

13. Procédé selon l'une quelconque des revendications 1 à 12, dans lequel le rapport molaire de fragments acide totaux sur l'acide polyfonctionnel sur fragments alcool totaux sur le polyol va de 10:1 à 1:10, de préférence de 3:1 à 1:3, et plus préférablement 1:1.

14. Procédé selon l'une quelconque des revendications 1 à 13, dans laquelle le rapport molaire de fragments anhydride totaux sur le composé anhydride sur les fragments alcool totaux sur le polyol va de 5:1 à 1:5, de préférence de 1,5:1 à 1:1,5, plus préférablement 0,5:1.

15. Procédé de fabrication d'une résine alkyde reformée, le procédé comprenant :
(a) le chauffage et le mélange simultanés sous cisaillement élevé d'eau et d'une résine alkyde insoluble infusible, sans fondre la résine, à une température suffisante pour promouvoir la dépolymérisation de la résine en un liquide prépolymère comprenant des monomères et oligomères de polyols et des excipients choisis dans le groupe constitué d'acides polyfonctionnels, anhydrides, et leurs mélanges ; et,
(b) l'évaporation de l'eau pour promouvoir la condensation des monomères et oligomères de polyols et d'excipients choisis dans le groupe constitué d'acides polyfonctionnels, anhydrides, et leurs mélanges du liquide prépolymère de façon à former la résine alkyde reformée.
